Europäisches Patentamt

European Patent Office

Office européen des brevets

(11) Veröffentlichungsnummer: **0 202 504**

**B1**

(12) **EUROPÄISCHE PATENTSCHRIFT**

(45) Veröffentlichungstag der Patentschrift: **16.08.90**

(51) Int. Cl.⁵: **C 04 B 35/80**

(21) Anmeldenummer: **86105753.7**

(22) Anmeldetag: **25.04.86**

(54) **Keramischer Verbundwerkstoff.**

(30) Priorität: **24.05.85 DE 3518844**

(43) Veröffentlichungstag der Anmeldung:
**26.11.86 Patentblatt 86/48**

(45) Bekanntmachung des Hinweises auf die
Patenterteilung:
**16.08.90 Patentblatt 90/33**

(84) Benannte Vertragsstaaten:
**AT BE CH DE FR GB IT LI LU NL SE**

(56) Entgegenhaltungen:
**EP-A-0 102 590
EP-A-0 175 329
EP-A-0 194 811
US-A-4 507 224**

**CERAMIC ENGINEERING AND SCIENCE
PROCEEDINGS, Band 5, Nr. 7/8, Juli-August
1984, Seiten 513-529, Columbus, Ohio, US; B.A.
BENDER et al.: "Electron microscopy of ceramic
fiber-ceramic matrix composites-comparison
with processing and behavior"**

(73) Patentinhaber: **Max-Planck-Gesellschaft zur
Förderung der Wissenschaften e.V.
Bunsenstrasse 10
D-3400 Göttingen (DE)**

(72) Erfinder: **Claussen, Nils, Prof. Dr.
Föhrengrund 7
D-2107 Rosengarten (DE)**
Erfinder: **Petzow, Günter, Prof. Dr.
Tannenweg 7
D-7022 Leinfelden-Echterdingen (DE)**

(74) Vertreter: **Weickmann, Heinrich, Dipl.-Ing. et al
Patentanwälte Dipl.-Ing. H.Weickmann Dipl.-
Phys.Dr. K.Fincke Dipl.-Ing. F.A.Weickmann
Dipl.-Chem. B. Huber Dr.-Ing. H. Liska Dipl.-
Phys.Dr. J. Prechtel Postfach 860820
D-8000 München 86 (DE)**

Courier Press, Leamington Spa, England.

**EP  0 202 504  B1**

(56) Entgegenhaltungen:
SAE PROCEEDINGS OF THE TWENTY-FIRST
AUTOMOTIVE TECHNOLOGY DEVELOPMENT
CONTRACTORS' COORDINATION MEETING, P-
138, März 1984, Seiten 215-222; S. MUSIKANT
et al.: "Transformation toughening of ceramics
for engines"

AMERICAN CERAMIC SOCIETY BULLETIN, Band
64, Nr. 2, Februar 1985, Seiten 298-304,
Columbus, Ohio, US; G.C. WEI et al.:
"Development of SiC-whisker-reinforced
ceramics"

**Beschreibung**

Keramische Werkstoffe können durch Einbau von Fasern verstärkt werden (s.u.a. a) D. C. Phillips, AERE Harwell Rept. No. AERE-R 10056, UK, Febr. 1981; b) O. B. Marshall and A. G. Evans, J. Am. Ceram. Soc. 68 (1985) 330; c) D. C. Phillips, Fiber Reinforad Ceramics in Handbook of Composites, Vol. 4, Elsevier Science Publ., 1983, pp. 374—427). Während des Sinter- bzw. Heißpreßvorgangs werden jedoch in den meisten Fällen die guten mechanischen Eigenschaften der Fasern zum Teil stark verschlechtert (durch Kornwachstum der meist feinkristallinen Fasern, durch Reaktionen mit der keramischen Matrix, durch vielfachen Bruch, etc.). Im Gegensatz zu vielkristallinen Fasern überstehen einkristalline Fasern (Whisker) das Einbringen in eine keramische Matrix fast unversehrt (s.u.a. P. F. Becher, J. Am. Ceram. Soc. 67 (1984) C-267). Dies liegt u.a. an der außerordentlich hohen mechanischen Festigkeit (SiC-Whisker: bis 20 GPa, $Al_2O_3$-Whisker bis 5 GPA), den hohen Elastizitätsmodulen (SiC: 500 bis 700 GPA, $Al_2O_3$:>400 GPa) und der meist theoretischen Dichte (d.h. keine Poren mit Gaseinschlüssen, keine Korngrenzen, etc.). Trotz dieser guten theoretischen Voraussetzungen für eine Verstärkung können die Whiskereigenschaften nur ungenügend auf die keramische Matrix übertragen werden, da chemische (feste) Bindungen zwischen Whisker und Matrix (insbesondere bei tieferen und mittleren Temperaturen) zu Spannungssingularitäten führen (B. A. Bender, D. Lewis, W. S. Coblenz and R. W. Rice, Ceram. Eng. Sci. Proc. 5 (1984) 513), die nach Entstehung eines Matrixrisses auch zum Bruch des Whiskers führren.

Nur in den seltenen Fällen, in denen die Grenzflächenfestigkeit zwischen Matrix und Faser/Whisker relativ niedrig ist und so zum Herausziehen (pull-out) der Whisker führt, werden diese Singularitäten vermieden und die inherente Festigkeit des Whiskers kann ausgenutzt werden.

Aus Ceramic Engineering and Science Proceedings 5 (1984) July—August, Nr. 7/8, Columbus Ohio USA sind bereits keramische Formkörper bekannt, die aus verschiedenen Materialien hergestellt wurden. Für $ZrO_2$-haltige Keramiken wurden dabei maximale Festigkeiten von 180 MPa erzielt, was ihren Einsatz für hochbelastete Teile nicht zuläßt.

Der Erfindung liegt daher die Aufgabe zugrunde, die oben beschriebenen Schwierigkeiten bie den bisher bekannten faserverstärkten keramischen Werkstoffen zu überwinden und einen derartigen Werkstoff zu schaffen, bei welchem die Festigkeitseigenschaften der Verstärkungsfasern auf die Matrix übertragen werden. Insbesondere ist es ein Ziel der Erfindung, bei einem derartigen Formkörper hohe Bruchfestigkeiten bis zu Temperaturen von etwa 1000°C zu verwirklichen, und zwar auch dann, wenn zwischen dem Verstärkungsmaterial und der Matrix eine chemische Bindung eintritt, ferner wirksame Verstärkungen auch dann zu erzielen, wenn die thermischen Ausdehnungskoeffizienten der Verstärkungsfasern kleiner sind als die der Matrix und schließlich auch bei geringem Faservolumenanteil einen Verstärkungseffekt zu erzielen, der ein druckloses Sintern und damit eine heißisostatische Nachverdichtung ohne Einkapselung ermöglicht.

Dies wird erfindungsgemäß erreicht durch einen faserverstärkten keramischen Formkörper mit verbesserter mechanischer Festigkeit, welcher dadurch gekennzeichnet ist, daß er mindestens 15 Vol.-% $ZrO_2$, $HfO_2$ oder $ZrO_2/HfO_2$-Legierung in Form monokliner Kristalle und eine zur Erhöhung der Festigkeit ausreichende Menge anorganischer Faser enthält und eine 4-Punktfestigkeit von mindestens 480 MPa bei Raumtemperatur aufweist und durch Heißpressen einer Mischung von keramischem Matrixmaterial, mindestens 15 Vol.-% tetragonalam $ZrO_2$, $HfO_2$ oder $ZrO_2/HfO_2$-Legierungsteilchen und den Fasern bei einer Temperatur über 1000°C erhältlich ist.

Der Faseranteil beträgt vorzugsweise mindestens 2 Vol.-%. Die obere Grenze wird durch den angestrebten Verstärkungseffekt in Verbindung mit der jeweiligen stofflichen Zusammensetzung von Matrix und monokliner Phase bestimmt und läßt sich durch einige Versuche leicht feststellen. Besonders bevorzugt wird ein Faseranteil von 4 bis 50 Vol.-%. Die Faser selbst besteht vorzugsweise aus Whisker, kann aber ganz oder teilweise auch durch vielkristalline Faser ersetzt sein.

Als Whiskermaterial kommen die bekannten anorganischen Whiskersubstanzen in betracht. Bevorzugt werden SiC, $Al_2O_3$ und $Si_3N_4$ allein oder gemischt.

Die Dicke der Whisker ist nicht wesentlich. Bevorzugt wird jedoch eine Dicke zwischen 0,1 und 5 µm.

Als Matrixmaterial kommen die für hochfeste keramische Formkörper geeigneten Materialien in betracht. Bevorzugt werden $Al_2O_3$, teilstabilisiertes $ZrO_2$ (PSZ), feinkristallines tetragonales $ZrO_2$ (TZP), Cordierit, Mullit, Mg-Al-Spinell, $Al_2TiO_5$, Zirkon, $Si_3N_4$, $B_4C$ sowie deren Mischungen.

Der Gehalt an monoklinen Kristallen von $ZrO_2$, $HfO_2$ bzw. Legierungen derselben liegt vorzugsweise zwischen 18 und 60 Vol.-%.

Ein wesentlicher Vorteil der Erfindung gegenüber allen bisher entwickelten Keramikfaser/Keramikmatrixverbundwerkstoffen (s.u.a. I. W. Donald and P. W. McMillan, J. Mat. Sci, II (1976) 949) liegt darin, daß die Matrix (besonders bei einer chemischen Bindung) durch die Whisker vorgespannt wird (Druckspannungen, ähnlich Spannbeton), auch wenn die Differenz der thermischen Ausdehnungskoeffizienten

$$(\Delta\alpha = \alpha_m - \alpha_f > 0;$$

m: Matrix, f: Faser/Whisker) positiv ist, d.h. normalerweise nach dem Abkühlen von der Herstellungstemperatur umgekehrte Spannungsverhältnisse (Zug in der Matrix, Druck in der Faser/Whisker) herrschen würden. Dies wird darauf zurückgeführt, daß der Matrix eine ausreichende Menge an $ZrO_2$ (bzw. $HfO_2$ oder $ZrO_2$—$HfO_2$-

Legierungen) zugesetzt wird, welches nach seiner Umwandlung von der tetragonalen (t) Gittermodifikation in die monokline (m) bei ca. 600 bis 900°C aufgrund der damit verbundenen Volumenausdehnung (ca. 5 Vol.-%, s.u.a. Advances in Ceramics, Vol. 12, 1984) die eingelagerten Whisker unter hohe Zugspannungen setzt. Dieses Prinzip, das besonders bei Whiskern mit geringem

$$\alpha(z.B. \ \alpha(SiC)=4,7\times10^{-6}/K,$$
$$\alpha(Si_3N_4)=3,2\times10^{-6}/K)$$

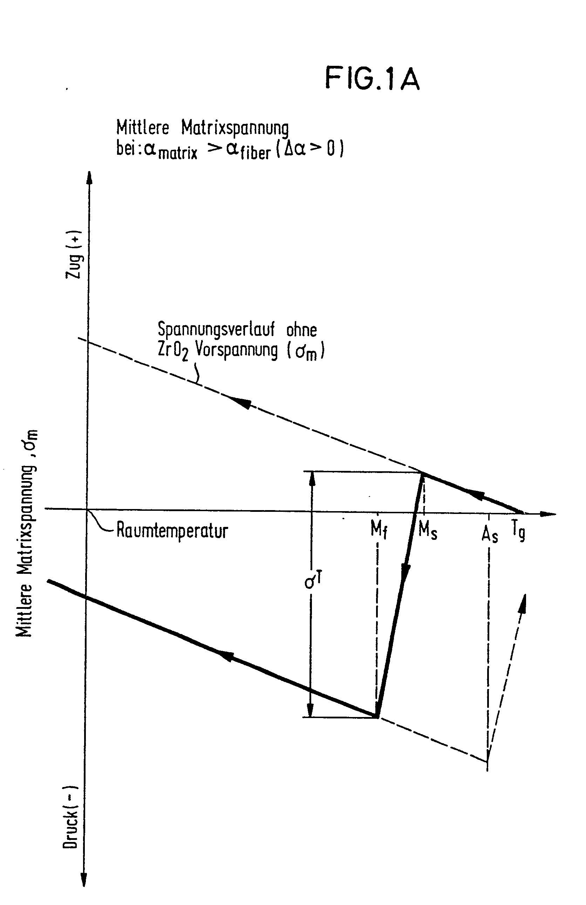

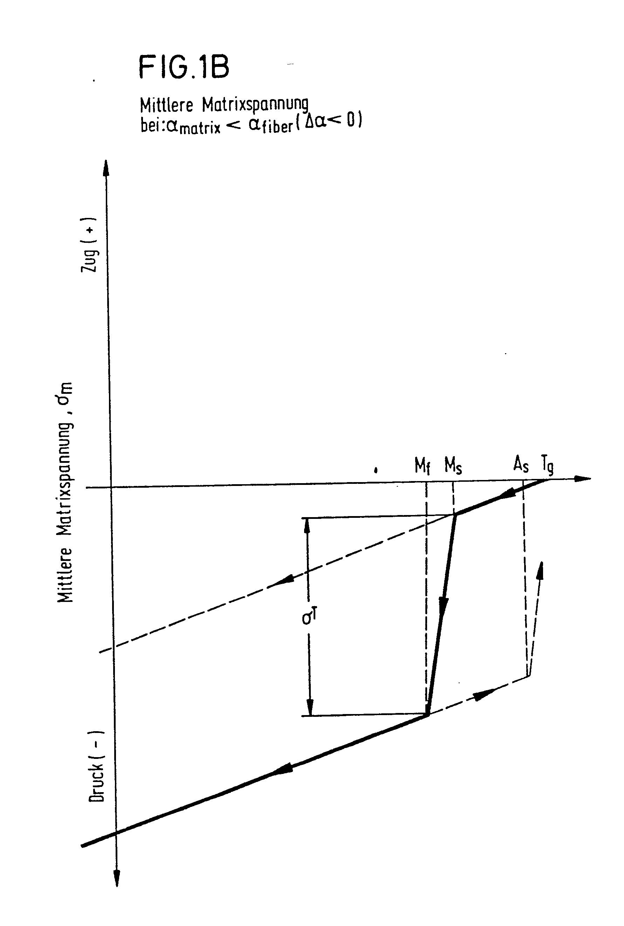

von großer Bedeutung iste, wird nachstehend in Verbindung mit der beigefügten Zeichnung (Fig. 1A und B) näher beschrieben, wobei die zu $ZrO_2$ gemachten Ausführungen sinngemäß auch für $HfO_2$ und Legierungen gelten.

In einer keramischen Matrix mit einer ausreichenden Menge an darin eingelagerten Whiskern (bzw. auch Fasern) werden beim Abkühlen von der Herstellungstemperatur von einer Temperatur $T_g$ ab ($T_g$: Temperatur unterhalb der Spannungen nicht mehr relaxieren können) Zug- (Fall A in Fig. 1) bzw. Druckspannungen (Fall B in Fig. 1) aufgrund der thermischen Fehlpassung $\Delta\alpha$ aufgebaut. Zwischen $M_s$ und $M_f$ (Martensitstart- und -endtemperatur) wandelt sich die $ZrO_2$-Phase in der Matrix von t→m um und bewirkt entsprechend dem Volumenanteil (V) in der Matrix Druckspannungen ($\delta^T$), die von den eingelagerten Whiskern in Form von Zugspannungen kompensiert werden. Die mittlere Matrixspannung ($\delta m$) kann nach folgender Formel näherungsweise berechnet werden:

$$\delta m = \frac{(\alpha_m - \alpha_f) \ E_f \ V_f \ \Delta T}{1 + V_f \ (E_f/E_m - 1}$$

$$\delta T = \frac{E_f \ V_f v \ \varepsilon^T/3}{1 + V_f \ (E_f/E_m - 1)}$$

darin sind $E_f$ und $E_m$ der E-Modul des Whisker bzw. der Matrix, $V_f$ der Volumenanteil des Whisker, $\varepsilon^T$ (≈5%) die umwandlungsbedingte Volumenausdehnung des $ZrO_2$ und v der umwandlungsfähige Volumenanteil der $ZrO_2$-Phase in der keramischen Matrix.

Die umwandlungsbedingte Vorspannung der Matrix wird zwischen $M_f$ und Raumtemperatur (RT) im Fall A reduziert und im Fall B weiter erhöht. Die Vorspannung wird erste bei Überschreiten der Rückumwandlung (m→t) zwischen $A_s$ und $A_f$ (Austenitstart- und Austenitendtemperatur; ~1000—1170°C) abgebaut, d.h., derartige keramische Verbundwerkstoffe können bis $A_s$ unter Nutzung der hohen Whiskerfestigkeit eingesetzt werden. $A_s$ kann durch Zulegieren von $HfO_2$ zu $ZrO_2$ erhöht werden

(z.B. $ZrO_2 + 10$ Mol.-% $HfO_2 → A_s$ ~1250°C).

Die wesentliche Voraussetzung für die Wirksamkeit der Erfindung ist die Umwandlungsfähigkeit der in der keramischen Matrix zugemischten $ZrO_2$-

Phase bei ausreichenc hoher Temperatur (d.h. $M_s > 600°C$). Dies wird dadurch erreicht, daß mindestens 15 Vol.-% $ZrO_2$ zugesetzt werden. Außerdem sollten Verbindungen, die die tetragonale bzw. kubische Form des $ZrO_2$ stabilisieren (z.B. MgO, CaO, $Y_2O_3$, etc.) normalerweise vermieden werden, außer im Fall einer Verstärkung von PSZ- und TZP-Keramiken (PSZ: teilstabilisiertes $ZrO_2$, TZP: feinkristallines tetragonales $ZrO_2$, s.u.a. Advances in Ceramics, Vol. 12 (1984)). Dies bedeutet, daß im Gegensatz zu sogenannten $ZrO_2$-verstärkten (bzw. umwandlungsverstärkten) Keramiken, in denen bei Raumtemperatur feine tetragonale Teilchen bzw. Mischungen aus tetragonalen und monoklinen Teilchen, bzw. Ausscheidungen eingelagert sind, bei der Erfindung entweder größere Teilchen (mit $M_s$-Temperaturen > 600°C) oder eine kontinuierliche monokline $ZrO_2$-Phase vorhanden ist. Bei $ZrO_2$-verstärkten Keramiken, die u.a. in den Patentschriften: US 4,419,311, US 4,298,385, US 4,184,882, US 4,218,253, US 4,322,249, DE 25 49 652 beschrieben sind, nimmt gewöhnlicherweise die verstärkende Wirkung (spannungsinduzierte Umwandlung bzw. Mikrorißbildung) mit zunehmender Temperatur ab (dazu siehe auch: N. Claussen, J. Mat. Sci. Eug. 71 (1985) 23). Bei den meisten erfindungsgemäßen Formkörpern (Fall A in Fig. 1) nimmt die Vorspannung mit zunehmender Temperatur zu, so daß in einigen Fällen zunächst sogar eine Festigkeitszunahme mit steigender Temperatur zu erwarten ist.

Erfindungsgemäß ist auch eine Kombination von Umwandlungsverstärkung mit Vorspannungsverstärkung erreichbar. Ferner können in einigen Fällen polykristalline Fasern statt Whisker verwendet werden, allerdings mit erheblich geringerer Wirksamkeit.

Ein weiterer Gegenstand der Erfindung ist ein Verfahren zur Herstellung der neuen faserverstärkten Keramikformkörpers, welches darin besteht, daß man Matrixteilchen, tetragonale $ZrO_2$, $HfO_2$ oder $ZrO_2/HfO_2$-Legierungsteilchen und Fasern gründlich mischt und bei einer Temperatur über 1000°C heiß verpreßt.

Die besonderen Vorteile der erfindungsgemäßen Whiskervorspannung eines keramischen Werkstoffs gegenüber den bisher bekannten faser/whiskerverstärkten keramischen Verbundwerkstoffen sind:

1. Hohe Bruchfestigkeit bis zu Temperaturen von ca. 1000°C ($A_s$).

2. Hoher Bruchwiderstand auch bei chemischer Bindung zwischen Whisker und Matrix.

3. Wirksame Verstärkung auch mit Whiskern, deren thermische Ausdehnungskoeffizienten kleiner als die der Matrix sind (insbesondere bei Kombinationen von PSZ- oder TZP-Keramiken mit SiC-Whiskern).

4. Verstärkungseffekt auch bei geringem Whiskervolumenanteil (<10 Vol.-%), bei denen in einem Verbundwerkstoff schon durch druckloses Sintern eine geschlossene Porosität erzielt werden kann; damit wird eine heißisostatische Nachverdichtung ohne Einkapselung möglich.

Aufgrund dieser Eigenschaften eignet sich der erfindungsgemäße Formkörper besonders für (eingießfähige) Motorenteile, als Maschinen- bzw. Apparatebauteil und als Schneidkeramik.

Die folgenden Beispiele erläutern die Erfindung weiter.

Beispiel 1

100 g einer wäßrigen Suspension aus 32 Vol.-% tetragonalem $ZrO_2$ (mittlerer Pulverteilchengröße ~0,5 μm) und 48 Vol.-% $Al_2O_3$ (~0,6 μm) werden 20 Vol.-% SiC-Whisker (Tateho Chemicals, SCW 1, 0,05 bis 0,5 μm) zugegeben, 10 Minuten mit Ultraschall dispergiert und 2 Stunden in einem Taumelmischer mit Hilfe von Plastikkugeln (~3 mm φ) vermischt. Der Schlicker wird anschließend sprühgetrocknet und in Graphitmatrizen zu Tabletten (35 mm φ, 15 mm dick) heißgepreßt (1500°C, 10 Minuten). An daraus hergestellten Biegestäbchen mit den Abmessungen 3×3×30 mm³ wurden 4-Punkt-Festigkeiten von 880 MPa und ein Bruchwiderstand ($K_{Ic}$) von 8,5 MPa√m (Eindruckmethode) gemessen. Die $M_s$-Tempera-tur war 750°C und >95% des $ZrO_2$ lag monoklin vor.

Beispiel 2

Wie im Beispiel 1 wurden aus 100 g einer Mischung aus 48 Vol.-% $ZrO_2$, 48 Vol.-% $Al_2O_3$ und 4 Vol.-% SiC-Whiskern Proben hergestellt. Die Festigkeit betrug 480 MPa und $K_{Ic}$=5,4 MPa√m. Das $ZrO_2$ war praktisch völlig monoklin. Eine gleichartig hergestellte Probe ohne SiC-Whisker war vielfach von Rissen durchzogen und hatte daher keine meßbare Festigkeit.

Beispiel 3

Wie im Beispiel 1 wurde aus 100 g einer Mischung aus 40 Vol.-% $ZrO_2$, 40 Vol.-% Cordierit und 20 Vol.-% SiC-Whisker Proben bei einer Temperatur von 1350°C, 10 Minuten heißgepreßt. Die Biegefestigkeit daraus hergestellter Stäbchen betrug 520 MPa und der $K_{Ic}$ 6.3 MPa√m. Gleiche Proben ohne SiC-Whisker besaßen eine Festigkeit von 250 MPa; Risse, wie im Beispiel 2, waren hier nicht feststellbar, weil eine dünne Glasphase zwischen den Körner die Umwandlungsspannungen relaxierte.

Beispiel 4

Wie im Beispiel 3 wurde eine Probe aus 60 Vol.-% Mullit, 20 Vol.-% $ZrO_2$ und 20 Vol.-% SiC-Whiskern bei 1600°C 20 Minuten heißgepreßt. Die Festigkeit betrug 610 MPa.

Beispiel 5

Wie im Beispiel 1 wurden aus 100 g einer Mischung aus 40 Vol.-% 3y-TZP-Pulver ($ZrO_2$ mit 3 Mol-% $Y_2O_3$, Toyo Soda Chem., Japan, mittlerer Teilchendurchmesser ~0,3 μm), 30 Vol.-% $ZrO_2$ und 30 Vol.-% SiC-Whiskern wurden Proben bei 1450°C 10 Minuten heißgepreßt. Die Biegefestigkeit bei Raumtemperatur betrug 1150 MPa (1300 MPa) und bei 1000°C 460 MPa (190 MPa); der $K_{Ic}$ bei Raumtemperatur war 14,4 MPa√m (6,5 MPa√m). Die Werte in Klammern betreffen ein gleichartig hergestelltes 3y-TZP ohne monoklines $ZrO_2$ und ohne SiC-Whisker.

Beispiel 6

Entsprechend Beispiel 5 wurden Protein statt mit SiC-Whiskern mit $Al_2O_3$-Whiskern (Firma Thermokinetics, Washington) hergestellt. Die Raumtemperaturfestigkeit betrug 1080 MPa und der $K_{Ic}$ 11,8 MPa√m.

Beispiel 7

Entsprechend Beispiel 5 wurden Proben statt mit 3y-TZP-Pulver mit 3Mg-PSZ-Pulver (3 Mol% MgO-haltiges $ZrO_2$, Fa. Magnesium Elektron, Twickenham, UK) mit 30 Vol.-% $Al_2O_3$-Whiskern (statt SiC-Whiskern) bei 1700°C 30 Minuten heißgepreßt. Nach einer Glühzeit von 2 Stunden bei 1420°C betrug die Raumtemperaturfestigkeit 880 MPa und der $K_{Ic}$ 13,6 MPa√m. Die Biegefestigkeit bei 1000°C betrug 440 MPa.

**Patentansprüche**

1. Faserverstärker keramischer Formkörper mit verbesserter mechanischer Festigkeit, dadurch gekennzeichnet, daß er mindestens 15 Vol.-% $ZrO_2$, $HfO_2$ oder $ZrO_2/HfO_2$-Legierung in Form monokliner Kristalle und eine zur Erhöhung der Festigkeit ausreichende Menge anorganischer Faser enthält und eine 4-Punktfestigkeit von mindestens 480 MPa bei Raumtemperatur aufweist und durch Heißpressen einer Mischung von keramischem Matrixmaterial, mindestens 15 Vol.-% tetragonalem $ZrO_2$, $HfO_2$ oder $ZrO_2/HfO_2$-Legie-rungsbestandteilen und den Fasern bei einer Temperatur über 1000°C erhältlich ist.

2. Formkörper nach Anspruch 1, dadurch gekennzeichnet, daß der Faseranteil mindestens 2 Vol.-% beträgt.

3. Formkörper nach Anspruch 2, dadurch gekennzeichnet, daß der Faseranteil 4 bis 50 Vol.-% beträgt.

4. Formkörper nach einem der vorhergehenden Ansprüche, dadurch gekennzeichnet, daß der Faseranteil ganz oder teilweise aus Whisker besteht.

5. Formkörper nach Anspruch 4, dadurch gekennzeichnet, daß der Whisker aus SiC, $Si_3N_4$ oder/und $Al_2O_3$ besteht.

6. Formkörper nach Anspruch 5, dadurch gekennzeichnet, daß der Whisker eine Dicke von 0,1 bis 5 μm aufweist.

7. Formkörper nach einem der vorhergehenden Ansprüche, dadurch gekennzeichnet, daß das Matrixmaterial aus $Al_2O_3$, PSZ, TZP, Cordierit, Mullit, Mg-Al-Spinell, $Al_2TiO_5$, Zirkon, $Si_3N_4$, $B_4C$ oder Mischungen davon besteht.

8. Formkörper nach einem der vorhergehenden Ansprüche, dadurch gekennzeichnet, daß die monoklinen Kristalle in einer Menge von 18 bis 60 Vol.-% vorliegen.

9. Formkörper nach Anspruch 1, dadurch gekennzeichnet, daß die Matrix aus teilstabilisier-tem oder feinkristallinem tetragonalem $ZrO_2$, min-destens 20 Vol.-% monokliner Kristalle und mindestens 20 Gew.-% Whisker besteht und einen Bruchwiderstand $K_{Ic}$ von mindestens 10 MPa√m aufweist.

10. Verfahren zur Herstellung eines Formkörpers nach einem der Ansprüche 1 bis 9, dadurch gekennzeichnet, daß man Matrixteilchen, tetragonale $ZrO_2$, $HfO_2$ oder $ZrO_2/HfO_2$-Legierungsteilchen und Fasern gründlich mischt und bei einer Temperatur über 1000°C heiß verpreßt.

11. Verfahren nach Anspruch 10, dadurch gekennzeichnet, daß man die Mischung der Bestandteile in einem flüssigen Medium vornimmt und den gebildeten Schlicker sprühtrocknet.

12. Verfahren nach Anspruch 10 oder 11, dadurch gekennzeichnet, daß das Heißpressen bei Temperaturen zwischen 1300° und 1800°C während 5 bis 60 Minuten durchgeführt wird.

13. Verwendung eines Formkörpers nach einem der Ansprüche 1 bis 9 als Motoren-, Maschinenbzw. Apparateteil oder als Schneidkeramik.

**Revendications**

1. Corps moulé céramique renforcé par des fibres et à résistance mécanique améliorée, caractérisé en ce qu'il contient au moins 15% en volume de $ZrO_2$, $HfO_2$ ou d'un alliage de $ZrO_2/HfO_2$ sous forme de cristaux monocliniques et une quantité de fibres inorganiques suffisante pour augmenter la résistance et en ce qu'il présente une résistance en quatre points d'au moins 480 MPa à la température ambiante, et en ce qu'il peut être obtenu par compression à chaud d'un mélange d'un matériau de matrice céramique, d'au moins 15% en volume de $ZrO_2$ tétragonal, $HfO_2$ ou de constituants d'un alliage de $ZrO_2/HfO_2$ et de fibres à une température supérieure à 1000°C.

2. Corps moulé selon la revendication 1, caractérisé en ce que la fraction de fibres est d'au moins 2% en volume.

3. Corps moulé selon la revendication 2, caractérisé en ce que la fraction de fibres est de 4 à 50% en volume.

4. Corps moulé selon l'une des revendications précédentes, caractérisé en ce que la fraction de fibres consiste totalement ou partiellement en whiskers.

5. Corps moulé selon la revendication 4, caractérisé en ce que les whiskers consistent en SiC, $Si_3N_4$ et/ou en $Al_2O_3$.

6. Corps moulé selon la revendication 5, caractérisé en ce que les whiskers présentent une épaisseur de 0,1 à 5 µm.

7. Corps moulé selon l'une des revendications précédentes, carctérisé en ce que le matériau de matrice consiste en $Al_2O_3$, PSZ, TZP, cordiérite, mullite, spinelle Mg-Al, $Al_2TiO_5$, zircone, $Si_3N_4$, $B_4C$ ou en mélanges de ceux-ci.

8. Corps moulé selon l'une des revendications précédentes, caractérisé en ce que les cristaux monocliniques sont présents en une quantité de 18 à 60% en volume.

9. Corps moulé selon la revendication 1, caractérisé en ce que la matrice consiste en $ZrO_2$ partiellement stabilisé ou tétragonal en fins cristaux, au moins 20% en volume de cristaux monocliniques et au moins 20% en poids de whiskers et présente une résistance à la rupture $K_{Ic}$ d'au moins 10 MPa√m.

10. Procédé de fabrication d'un corps moulé selon l'une des revendications 1 à 9, caractérisé en ce que l'on mélange intimement des particules de matrice, des particules tétragonales de $ZrO_2$, de $HfO_2$ ou d'alliage $ZrO_2/HfO_2$ et des fibres et l'on comprime à chaud à une température supérieure à 1000°C.

11. Procédé selon la revendication 10, caractérisé en ce que l'on forme le mélange des constituants dans un milieu fluide et l'on sèche par pulvérisation la suspension formée.

12. Procédé selon la revendication 10 ou 11, caractérisé en ce que la compression à chaud est effectuée à des températures comprises entre 1300°C et 1800°C pendant 5 à 60 minutes.

13. Utilisation d'un corps moulé selon l'une des revendications 1 à 9 comme pièce de moteur, de machine ou d'appareil ou comme céramique de coupe.

**Claims**

1. A fibre-strengthened ceramic formed body with improved mechanical strength, characterised in that it contains at least 15 vol.% of $ZrO_2$, $HfO_2$ or $ZrO_2/HfO_2$ alloy in the form of monoclinic crystals and an amount of inorganic fibres sufficient for the increase of the strength and displays a 4-point strength of at least 480 MPa at room temperature and is obtainable by hot pressing of a mixture of ceramic matrix materials, at least 15 vol.% of tetragonal $ZrO_2$, $HfO_2$ or $ZrO_2/HfO_2$ alloy components and the fibres at a temperature above 1000°C.

2. Formed body according to claim 1, characterised in that the fibre proportion amounts to at least 2 vol.%.

3. Formed body according to claim 2, characterised in that the fibre proportion amounts to 4 to 50 vol.%.

4. Formed body according to one of the preceding claims, characterised in that the fibre portion consists wholly or partly of whiskers.

5. Formed body according to claim 4, characterised in that the whiskers consist of SiC, $Si_3N_4$ and/or $Al_2O_3$.

6. Formed body according to claim 5, characterised in that the whiskers have a thickness of 0.1 to 5 µm.

7. Formed body according to one of the preceding claims, characterised in that the matrix material consists of $Al_2O_3$, PSZ, TZP, cordierite, mullite, Mg-Al spinel, $Al_2TiO_5$, zircon, $SiN_4$, $B_4C$ or mixtures thereof.

8. Formed body according to one of the preceding claims, characterised in that the monoclinic crystals are present in an amount of 18 to 60 vol.%.

9. Formed body according to claim 1, characterised in that the matrix consists of partly stabilised or finely crystalline tetragonal $ZrO_2$, at least 20 vol.% of monoclinic crystals and at least 20 wt.% of whiskers and has a break resistance $K_{Ic}$ of at least 10 MPa√m.

10. Process for the production of a formed body according to one of claims 1 to 9, characterised in that one thoroughly mixes matrix particles, tetragonal $ZrO_2$, $HfO_2$ or $ZrO_2/HfO_2$ alloy particles and fibres and hot presses at a temperature above 1000°C.

11. Process according to claim 10, characterised in that one carries out the mixing of the components in a liquid medium and spray dries the slurry formed.

12. Process according to claim 10 or 11, characterised in that the hot pressing is carried out at temperatures between 1300 and 1800°C for 5 to 60 minutes.

13. Use of a formed body according to one of claims 1 to 9 as engine, machine or apparatus part or as a cutting ceramic.

## FIG.1A

Mittlere Matrixspannung
bei: $\alpha_{matrix} > \alpha_{fiber}\,(\Delta\alpha > 0)$

Zug (+)

Spannungsverlauf ohne
$ZrO_2$ Vorspannung $(\sigma_m)$

Mittlere Matrixspannung , $\sigma_m$

Raumtemperatur

$M_f$   $M_s$   $A_s$   $T_g$

$\sigma^T$

Druck ( − )

# FIG.1B

Mittlere Matrixspannung
bei: $\alpha_{matrix} < \alpha_{fiber}(\Delta\alpha < 0)$